# EUROPEAN PATENT APPLICATION

(11) **EP 2 947 850 A2**
(43) Date of publication of application: **25.11.2015**
(21) Application number: 13806876.2
(22) Date of filing: 20.08.2013
(51) Int. Cl.: H04L 29/08, H04L 12/28

(54) **METHOD AND DEVICE FOR CENTRALIZED STORAGE OF PHOTOGRAPHS**

(30) Priority: 20.02.2013 CN 201310054243
(71) Applicant: ZTE Corporation, 518057 Shenzhen City, Guangdong Province (CN)
(72) Inventor: JIANG, Hua, Shenzhen City Guangdong province 518057 (CN); PENG, Heqing, Shenzhen City Guangdong province 518057 (CN)
(74) Representative: Novagraaf Technologies
(86) International application number: PCT/CN2013/081851
(87) International publication number: WO 2013/189380

(57) **Abstract**

Disclosed are a method and apparatus for centralized storage of photographs, which relates to the field of IP networks, wherein the method includes following steps performed by an intelligent terminal: obtaining an MAC address of an intelligent terminal, and taking it as a source MAC address of photograph files of the intelligent terminal; packaging the photograph files and the source MAC address to obtain data packets containing the photograph files and the source MAC address; uploading the data packets containing the photograph files and the source MAC address to a photograph file centralized storage device via a wired or wireless network. The photographs uploaded by the local terminal to the centralized storage service device can be found out from the intelligent terminal via the MAC address and can be more intelligently presented to the user, which is simple and practical.

## Description

### Technical Field

The present invention relates to the field of IP networks, and more particularly, to a method and apparatus for centralized storage of photographs.

### Background of the Related Art

With the increasingly abundant cultural needs and the intelligent video technology development, individuals and families own more and more intelligent video terminals, and the networking of various intelligent terminals has become more and more important, with more and more photograph files within the family, however, most photographs are distributively stored in the personal intelligent terminal storage space, which is not convenient for photograph management and sharing within the family, and with more and more widespread use of photograph files, source attributes of the photograph files have become increasingly important for photograph file resource management within the IP network environment. Therefore the attached MAC address in the centralized storage of photograph files can more effectively manage various photograph file resources in the IP network environment.

Nominal definition: intelligent terminal: a device with an IP network interface and with an intelligent operating system which can run application programs, and each intelligent terminal may have a plurality of wired or wireless network cards (that is, one or more MAC addresses);

IP network: WAN or LAN, a network which supports the Internet Protocol (network interconnecting protocol), consists of a plurality of network devices and intelligent terminals, and enables the IP communication.

Medium/Media Access Control (MAC) Address: also known as MAC address, logical address, which is used to define the location of a network device, and consists of 12 hexadecimal numbers with the length of 48 bits, wherein 0-23th bits are codes applied by a manufacturer asking an agency such as the IETF and used to identify the manufacturer, and also known as "Organizationally Unique Identifier". It is an identification identifying the LAN (Local Area Network) node. 24th-47th bits of the address are assigned by the manufacturer and are the unique serial number of all network cards manufactured by each manufacturer.

### Summary of the Invention

What should be solved by the present invention is to provide a method and apparatus for identifying a source attribute (source machine code: MAC address) of photograph file resources and managing the photograph file resources in a centralized storage of photographs of an intelligent portable terminal in the IP network environment.

The purpose of the present invention is to provide a method and apparatus for centralized storage of photographs, to find photographs uploaded by an intelligent terminal to a centralized storage service device from the local intelligent terminal via an MAC address, so as to ensure a proper implementation of convenient management of photograph files in the IP network environment.

According to one aspect of the present invention, a method for centralized storage of photographs is provided, comprising the following steps performed by an intelligent terminal:
obtaining an MAC address of the intelligent terminal, and taking the MAC address of the intelligent terminal as a source MAC address of photograph files of the intelligent terminal;
packaging the photograph files and the source MAC address to obtain data packets containing the photograph files and the source MAC address;
uploading the data packets containing the photograph files and the source MAC address to a photograph file centralized storage device via a wired or wireless network.

Preferably, the method further comprises the following steps performed by the photograph file centralized storage device:
parsing the received data packets containing the photograph files and the source MAC address;
storing the parsed-out photograph files and source MAC address information.

Preferably, the method further comprises the following steps for the intelligent terminal obtaining photographs stored in the photograph file centralized storage device:
the intelligent terminal sending a request to the photograph file centralized storage device for querying photographs uploaded by the intelligent terminal;
the photograph file centralized storage device sending the photograph files to the intelligent terminal according to the request by matching with the MAC address of the intelligent terminal;
the intelligent terminal receiving the photograph files sent by the photograph file centralized storage device.

Preferably, said storing the parsed-out photograph files and source MAC address information comprises: binding and storing the parsed-out photograph files and source MAC address information.

Preferably, said sending the photograph files to the intelligent terminal by matching with the MAC address of the intelligent terminal comprises:
the photograph file centralized storage device obtaining the MAC address of the intelligent terminal which sends the request by parsing the request;
the photograph file centralized storage device finding out the source MAC address uploaded by the intelligent terminal by matching the MAC address of the intelligent terminal with all stored MAC addresses, and then sending the photograph files bond with the source MAC address to the intelligent terminal.

According to another aspect of the present invention, an apparatus for centralized storage of photographs is provided, comprising the following modules set in an intelligent terminal:
a source MAC address obtaining module, configured to: obtain an MAC address of the intelligent terminal, and take the MAC address of the intelligent terminal as a source MAC address of photograph files of the intelligent terminal;
a data packaging module, configured to: package the photograph files and the source MAC address to obtain data packets containing the photograph files and the source MAC address;
a data sending module, configured to: upload the data packets containing the photograph files and the source MAC address for centralized storage via a wired or wireless network.

Preferably, the apparatus further comprises a photograph file centralized storage device, which is configured to: receive and store the uploaded data packets containing the photograph files and the source MAC address.

Preferably, the photograph file centralized storage device comprises:
a receiving module, configured to: receive the uploaded data packets containing the photograph files and the source MAC address;
a parsing module, configured to: parse the received data packets containing the photograph files and the source MAC address;
a storing unit, configured to: store the parsed-out photograph files and source MAC address information.

Preferably, the photograph file centralized storage device further comprises:
a binding unit, configured to: bind the parsed-out photograph files and source MAC address information.

Preferably, the photograph file centralized storage device further comprises:
a matching unit, configured to: when the intelligent terminal queries photographs uploaded by the intelligent terminal, match the MAC address of the intelligent terminal with stored source MAC addresses.

Compared with the prior art, the beneficial effects of the embodiment of the present invention are: by finding out the photographs uploaded by the local terminal to the centralized storage service device from the intelligent terminal via the MAC address, the photographs can be more intelligently presented to the user, which is simple and practical.

### Brief Description of Drawings

FIG. 1 is a schematic diagram of the composition structure of an uploaded photograph file data packet in accordance with an embodiment of the present invention;
FIG. 2 is a flow chart of a method for centralized storage of photographs provided in an embodiment of the present invention;
FIG. 3 is a schematic diagram of an apparatus for centralized storage of photograph provided in an embodiment of the present invention.
FIG. 4 is a flow chart of a method for sending photographs uploaded by an intelligent terminal in accordance with an embodiment of the present invention;
FIG 5 is a flow chart of a receiving method of a photograph centralized storage device in accordance with an embodiment of the present invention;
FIG. 6 is a schematic diagram of the photograph file centralized storage device in accordance with an embodiment of the present invention;
FIG. 7 is a schematic diagram of a photograph file centralized storage network system in accordance with an embodiment of the present invention.

### Preferred Embodiments of the Invention

Hereinafter, in conjunction with the accompanying drawings, the preferred embodiments of the present invention will be described in detail, it should be understood that, the preferred embodiments described below are for illustration only and are used to explain the present invention, and are not intended to limit the present invention.

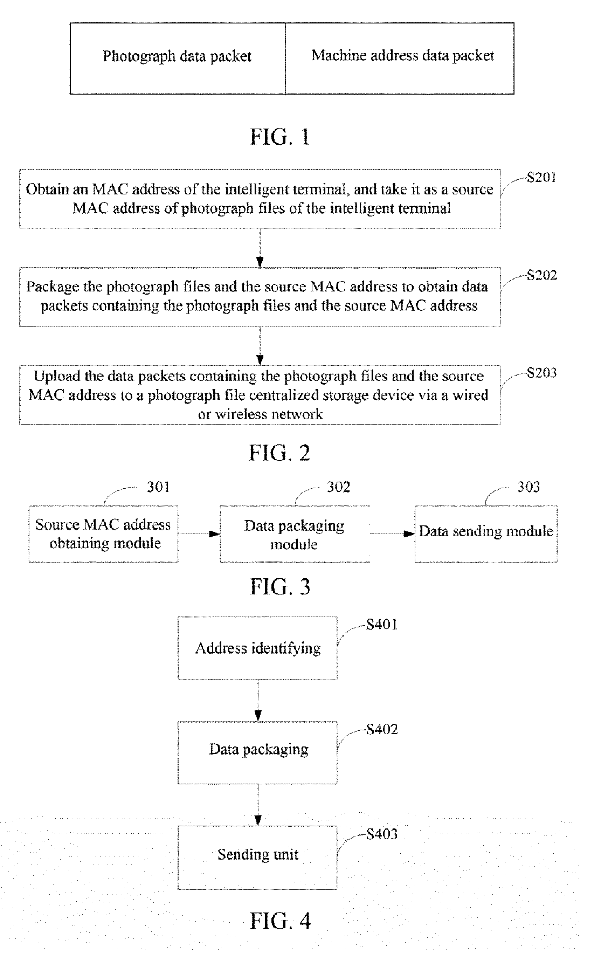

FIG. 1 shows a schematic diagram of the composition structure of an uploaded photograph file data packet in accordance with the present invention, as shown in FIG. 1, the photograph file data packets comprises photograph data packets and machine address data packets.

FIG. 2 shows a flow chart of the method for centralized storage of photographs provided in an embodiment of the present invention, as shown in FIG. 2, comprising the following steps performed by the intelligent terminal:
in step S201, it is to obtain an MAC address of the intelligent terminal, and take it as a source MAC address of photograph files of the intelligent terminal;
in step S202, it is to package the photograph files and the source MAC address to obtain data packets containing the photograph files and the source MAC address;
in step S203, it is to upload the data packets containing the photograph files and the source MAC address to a photograph file centralized storage device via a wired or wireless network.

The embodiment of the present invention further comprises the following step performed by the photograph file centralized storage device: parsing the received data packets containing the photograph files and the source MAC address; storing the parsed-out photograph files and source MAC address information.

The embodiment of the present invention further comprises the following steps of the intelligent terminal obtaining photographs stored in the photograph file centralized storage device: the intelligent terminal sending the photograph file centralized storage device a request for querying photographs uploaded by the intelligent terminal; the photograph file centralized storage device sending the photograph files to the intelligent terminal according to the request by matching with the MAC address of the intelligent terminal; the intelligent terminal receiving the photograph files sent by the photograph file centralized storage device.

In the embodiment of the present invention, storing the parsed-out photograph files and source MAC address information comprises: binding and storing the parsed-out photograph files and source MAC address information.

In the embodiment of the present invention, sending the photograph files to the intelligent terminal by matching the MAC address of the intelligent terminal comprises: the photograph file centralized storage device obtaining the MAC address of the intelligent terminal which sends the request by parsing the request; the photograph file centralized storage device finding out the source MAC address uploaded by the intelligent terminal by matching the MAC address of the intelligent terminal with all stored MAC addresses, and then sending the photograph files bond with the source MAC address to the intelligent terminal.

FIG. 3 shows a schematic diagram of an apparatus for centralized storage of photographs provided in an embodiment of the present invention, and as shown in FIG. 3, the apparatus comprises the following modules set in the intelligent terminal: a source MAC address obtaining module 301, used to obtain the MAC address of an intelligent terminal and take it as a source MAC address of photograph files of the intelligent terminal; a data packaging module 302, used to package the photograph files and the source MAC address to obtain data packets containing the photograph files and the source MAC address; a data sending module 303, used to upload the data packets containing the photograph files and the source MAC address for centralized storage via a wired or wireless network.

The embodiment of the present invention further comprises a photograph file centralized storage device which is used to receive and store the uploaded data packets containing the photograph files and the source MAC address, wherein the photograph file centralized storage device comprises: a receiving module, used to receive the uploaded data packets containing the photograph files and the source MAC address; a parsing module, used to parse the received data packets containing the photograph files and the source MAC address; a storing unit, used to store the parsed-out photograph files and source MAC address information; a binding unit, used to bind the parsed-out photograph files and source MAC address information; a matching unit, used to, when the intelligent terminal queries its uploaded photographs, match the MAC address of the intelligent terminal with its stored source MAC addresses.

FIG. 4 shows a flow chart of a method for sending photographs uploaded by the intelligent terminal in accordance with the present invention, as shown in FIG. 4, comprising the following steps:
in step S401, the intelligent terminal identifies the MAC address of the local machine;
in step S402, the intelligent terminal packages the photograph files and the MAC address to form the photograph data packets shown in FIG. 1;
in step S403, the intelligent terminal sends the data shown in FIG. 1 to the photograph centralized storage device in the IP network.

The intelligent terminal application program identifies the MAC address, and the intelligent terminal photograph uploading program also packages the MAC address and the photograph files, and sends the packaged data packets to the photograph centralized storage service device via the IP network environment.

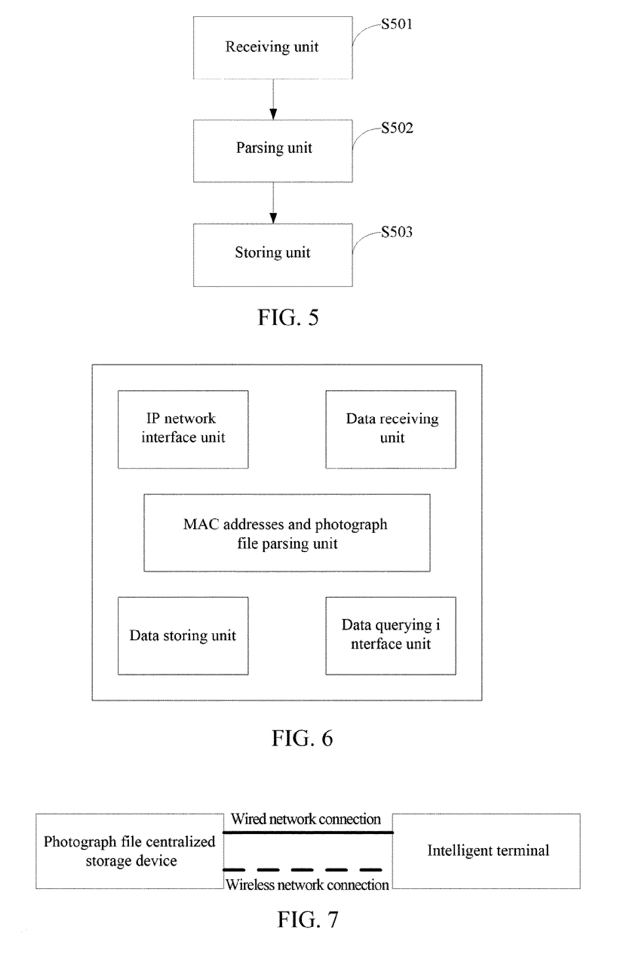

FIG. 5 shows a flow chart of a receiving method of the photograph centralized storage devic according to the present invention, as shown in FIG. 5, comprising the following steps:
in step S501, the receiving unit of the photograph centralized storage device in the IP network receives the photograph data packets shown in FIG.1 and sent by the intelligent terminal;
in step S502, the parsing unit of the photograph centralized storage device in the IP network parses the photograph data packets shown in FIG. 1;
in step S503, the storing unit of the photograph centralized storage device in the IP network stores the photograph data;
the photograph centralized storage service device receives the photograph data packets sent by the intelligent terminal, separates the photograph files and the source MAC address information and stores them in the storing unit of the photograph centralized storage device.

The intelligent terminal of the present invention accesses the photograph centralized storage device via the application program, and may know the MAC address for centrally stored photograph files by querying the intelligent terminal uploading through the network, and the intelligent terminal spontaneously identifies the photographs uploaded or shot by the local machine.

FIG. 6 shows a schematic diagram of the photograph file centralized storage device in the present invention, as shown in FIG. 6, comprising an IP network interface unit (wireless or wired network interface), a data receiving unit, an MAC addresses and photograph file parsing unit, a data storing unit, and a data querying interface unit.

FIG. 7 shows a schematic diagram of a photograph file centralized storage network system according to the present invention, as shown in FIG. 5, comprising: a photograph file centralized storage device, an IP network environment and an intelligent terminal, its management method comprises the following steps:
in step 701: the intelligent terminal packages the photograph files and the source MAC address of the intelligent terminal;
in step 702: the intelligent terminal uploads data packets containing the photograph files and the source MAC address to the photograph file centralized storage device via a wired or wireless network;
in step 703: the photograph file centralized storage device parses the received photograph data packets;
in step 704: the photograph file centralized storage device stores the parsed-out photograph files and source MAC address information;
in step 705: the intelligent terminal send a request to the photograph file centralized storage device for querying photographs uploaded by the machine;
in step 706: the photograph file centralized storage device sends the photograph files to the intelligent terminal according to the request from the intelligent terminal by means of matching with the MAC address of the intelligent terminal;
in step 707: the intelligent terminal presents the received photograph files correspondingly uploaded by the local machine.

The basic idea of the embodiment of the present invention is: a variety of intelligent terminals with video capabilities themselves have unique MAC addresses in the full network, when uploading the photographs to the centralized storage service device through the application program of the local intelligent terminal, the intelligent terminal application program obtains the MAC address, while uploading the photograph files, packages and sends the MAC address to the centralized storage service device, the centralized storage service device receives the photographs and the MAC address, parses and stores them in the storage unit of the centralized storage service device, and is capable of knowing which device shots photographs through the intelligent terminal querying the photographs stored in the centralized storage service device, and in combination with related attributes of the photographs, the photographs can be more intelligently presented to the user. The scheme implementation of the present invention is simple and practical.

Despite the present invention has been described in detail in the above, the present invention is not limited to this, those skilled in the art can make various modifications according to the principles of the present invention. Therefore, all modifications made according to the principles of the present invention should be understood to fall within the protection scope of the present invention.

### Industrial Applicability

In summary, with the embodiment of the present invention, the photographs uploaded by the local terminal to the centralized storage service device can be found out from the intelligent terminal via the MAC address, can be more intelligently presented to the user, which is simple and practical.

## Claims

1. A method for centralized storage of photographs, comprising the following steps performed by an intelligent terminal:
obtaining a Media Access Control (MAC) address of the intelligent terminal, and taking the MAC address of the intelligent terminal as a source MAC address of photograph files of the intelligent terminal;
packaging the photograph files and the source MAC address to obtain data packets containing the photograph files and the source MAC address;
uploading the data packets containing the photograph files and the source MAC address to a photograph file centralized storage device via a wired or wireless network.

2. The method of claim 1, further comprising the following steps performed by the photograph file centralized storage device:
parsing the received data packets containing the photograph files and the source MAC address;
storing the parsed-out photograph files and source MAC address information.

3. The method of claim 2, further comprising the following steps for the intelligent terminal obtaining photographs stored in the photograph file centralized storage device:
the intelligent terminal sending a request to the photograph file centralized storage device for querying photographs uploaded by the intelligent terminal;
the photograph file centralized storage device sending the photograph files to the intelligent terminal according to the request by matching with the MAC address of the intelligent terminal;
the intelligent terminal receiving the photograph files sent by the photograph file centralized storage device.

4. The method of claim 3, wherein, said storing the parsed-out photograph files and source MAC address information comprises: binding and storing the parsed-out photograph files and source MAC address information.

5. The method of claim 4, wherein, said sending the photograph files to the intelligent terminal by matching with the MAC address of the intelligent terminal comprises:
the photograph file centralized storage device obtaining the MAC address of the intelligent terminal which sends the request by parsing the request;
the photograph file centralized storage device finding out the source MAC address uploaded by the intelligent terminal by matching the MAC address of the intelligent terminal with all stored MAC addresses, and then sending the photograph files bond with the source MAC address to the intelligent terminal.

6. An apparatus for centralized storage of photographs, comprising the following modules set in an intelligent terminal:
a source MAC address obtaining module, configured to: obtain an MAC address of the intelligent terminal, and take the MAC address of the intelligent terminal as a source MAC address of photograph files of the intelligent terminal;
a data packaging module, configured to: package the photograph files and the source MAC address to obtain data packets containing the photograph files and the source MAC address;
a data sending module, configured to: upload the data packets containing the photograph files and the source MAC address for centralized storage via a wired or wireless network.

7. The apparatus of claim 6, further comprising a photograph file centralized storage device, which is configured to: receive and store the uploaded data packets containing the photograph files and the source MAC address.

8. The apparatus of claim 7, wherein, the photograph file centralized storage device comprises:
a receiving module, configured to: receive the uploaded data packets containing the photograph files and the source MAC address;
a parsing module, configured to: parse the received data packets containing the photograph files and the source MAC address;
a storing unit, configured to: store the parsed-out photograph files and source MAC address information.

9. The apparatus of claim 8, wherein, the photograph file centralized storage device further comprises:
a binding unit, configured to: bind the parsed-out photograph files and source MAC address information.

10. The apparatus of claim 9, wherein, the photograph file centralized storage device further comprises:
a matching unit, configured to: when the intelligent terminal queries photographs uploaded by the intelligent terminal, match the MAC address of the intelligent terminal with stored source MAC addresses.
